# EUROPÄISCHE PATENTSCHRIFT

(11) **EP 2 136 528 B1**
(45) Veröffentlichungstag und Bekanntmachung des Hinweises auf die Patenterteilung: **19.02.2014**
(21) Anmeldenummer: 09006230.8
(22) Anmeldetag: 07.05.2009
(51) Int. Cl.: H04L 29/06, G07F 7/10, G06Q 20/04, G06Q 20/38, G06Q 20/40, H04L 9/32

(54) **Verfahren und System zum Erzeugen einer abgeleiteten elektronischen Identität aus einer elektronischen Hauptidentität**
Method and system for creating a derived electronic identity from an electronic main identity
Procédé et système de production d'une identité électronique déviée à partir d'une identité électronique principale

(30) Priorität: 17.06.2008 DE 102008028701
(43) Veröffentlichungstag der Anmeldung: 23.12.2009
(73) Patentinhaber: Giesecke & Devrient GmbH, 81677 München (DE)
(72) Erfinder: Eichholz, Jan, 80997 München (DE); Grobbel, Hubertus, 81829 München (DE); Aschauer, Hans, 81829 München (DE); Meister, Gisela, Dr., 81737 München (DE)

(56) Entgegenhaltungen:
- EP-A- 1 369 829
- WO-A-01/82092
- FR-A- 2 779 599
- KINNEGING T A F: "Machine Readable Travel Documents Technical Report PKI for Machine Re" INTERNET CITATION, [Online] XP002396748 Gefunden im Internet: URL:http://www.icao.int/mrtd/download/docu ments/TR-PKI%20mrtds%20ICC%20re ad-only%20access%20v1_1.pdf#search=%22PKI% 20FOR%20MACHINE%20READABLE% 20TRAVEL%20DOCUMENTS%20OFFERING%20ICC%20RE AD-ONLY%20ACCESS%22> [gefunden am 2006-08-29]

## Beschreibung

Die Erfindung betrifft ein Verfahren und ein System zum Erzeugen einer abgeleiteten elektronischen Identität aus einer elektronischen Hauptidentität.

Der Nutzer einer elektronischen Hauptidentität, beispielsweise der auf dem Datenträger eines elektronischen Reisepasses hinterlegten Identität, hat oftmals das Bedürfnis, neben seiner Hauptidentität auch eine weitere Identität für spezielle Zwecke einzusetzen, beispielsweise um sich mit dieser Identität Zutritt auf das Firmenglände seiner Arbeitsstelle zu verschaffen oder diese Identität zum Zugang zu einem Computer zu nutzen. Auf diese Weise kann insbesondere die Verwendung der besonders wichtigen Hauptidentität des Nutzers auf nur sehr spezielle Anwendungsfälle reduziert werden, wodurch die Gelegenheiten für Angriffe auf die Hauptidentität weniger werden. Dadurch, dass die Hauptidentität nur noch selten verwendet wird, ist ferner der physikalische Verschleiß des die Hauptidentität enthaltenden Datenträgers geringer und es kommt auch zu selteneren Verlusten der Hauptidentität.

Aus dem Dokument US 2007/0078786 A1 ist es bekannt, eine zweite Identifikation für eine Person, insbesondere in der Form einer zweiten Postanschrift, Email-Adresse, Telefonnummer und dergleichen, zu generieren. Diese zweite Identifikation wird dabei in Kombination mit entsprechenden Identifikations-Diensten verwendet, an welche auch der Antrag zur Erzeugung einer zweiten Identifikation gerichtet wird. Die Erzeugung der Identifikation ist somit mit einer Antragsstellung bei einem Identifikations-Dienst verbunden, wodurch die Erzeugung der Identifikation aufwändig wird.

Dokument WO0182092 offenbart ein Verfahren zur Delegation von Zugriffsrechten von einem Nutzer zum anderen, wobei die Zugangskontrolle durch ein Zertifikat in den Chipkarten der Nutzer ausgeführt wird. Der Nutzer kann seinerseits selbst neue Nutzer in dem System anmelden.

Aufgabe der Erfindung ist es, ein Verfahren und ein System zum Erzeugen einer abgeleiteten Identität aus einer Hauptidentität zu schaffen, mit denen die abgeleitete Identität einfach und sicher auf einen vorbestimmten Datenträger generiert werden kann.

Diese Aufgabe wird durch die unabhängigen Patentansprüche gelöst. Weiterbildungen der Erfindung sind in den abhängigen Ansprüchen definiert.

Ausführungsbeispiele der Erfindung werden nachfolgend anhand der beigefügten Figuren detailliert beschrieben.

Es zeigen:
Fig. 1 eine schematische Darstellung des Ablaufs einer ersten Ausführungsform des erfindungsgemäßen Verfahrens; und
Fig. 2 eine schematische Darstellung des Ablaufs einer zweiten Ausführungsform des erfindungsgemäßen Verfahrens.

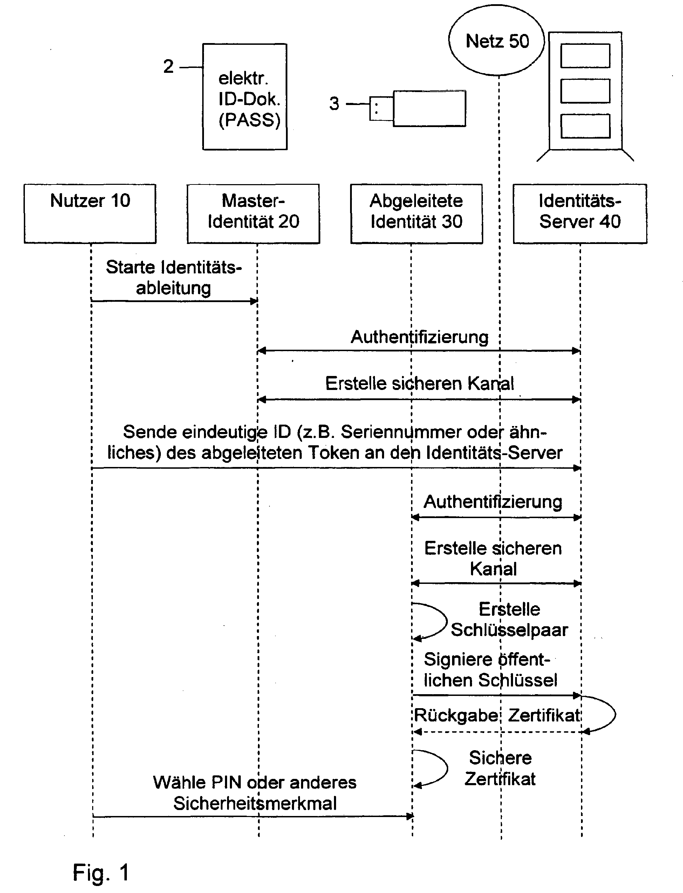

Fig. 1 zeigt den Ablauf eines nicht erfindungsgemäßen Verfahrens, bei dem aus einer ursprünglichen Haupt- bzw. Master-Identität 20 eines, nachfolgend stellvertretend für ein eID-Dokument zugrundegelegten elektronischen Passes 2 unter Zwischenschaltung eines Identitäts-Servers 40 eine abgeleitete Identität 30 erzeugt wird. Die im elektronischen Pass gespeicherte Master-Identität enthält hierbei einen öffentlichen und einen privaten Schlüssel sowie ein Zertifikat, welches beispielsweise durch das Signieren des öffentlichen Schlüssels durch eine vertrauenswürdige Zertifizierungsstelle erzeugt wurde. Zwischen dem Identitäts-Server und den Identitäten 20 bzw. 30 kann über ein entsprechendes Netz 50, beispielsweise das Internet, eine Datenverbindung aufgebaut werden.

Ein menschlicher Nutzer 10, dessen Identitätsdaten als Mater-Identität 20 in dem elektronischen Pass 2 gespeichert sind, möchte aus seiner Master-Identität eine abgeleitete Identität erzeugen, da er seinen elektronischen Pass nicht überall als Authentifizierungskarte einsetzen möchte. Insbesondere soll die abgeleitete Identität in speziellen Fällen, z.B. als Identitätskarte für den Zutritt zur Arbeitsstelle, zur Nutzung eines PCs und dergleichen, verwendet werden. Die abgeleitete Identität ist in Fig.1 mit Bezugszeichen 30 bezeichnet und soll auf einem Datenträger in der Form eines USB-Tokens 3 hinterlegt werden.

Zur Erzeugung der abgeleiteten Identität wird durch den Nutzer 10 die Identitätsableitung gestartet. Zunächst findet ein Authentifizierungsprozess zwischen der Master-Identität 20 und dem Identitäts-Server 40 statt, wobei diese Authentifizierung nach beliebigen, aus dem Stand der Technik bekannten Verfahren, insbesondere unter Einbeziehung der Zertifikate bzw. der Schlüssel der Master-Identität und des Identitäts-Servers, ablaufen kann. Nach der Authentifizierung oder darauf aufbauend wird dann ein sicherer Datenkanal zwischen der Master-Identität 20 und dem Identitäts-Server 40 etabliert. Um ebenfalls eine sichere und authentifizierte Verbindung zwischen der abgeleiteten Identität 30 und dem Identitäts-Server 40 herstellen zu können, muss die abgeleitete Identität 30 eindeutig identifiziert werden. Dies erfolgt in dem Verfahren gemäß Fig.1 unter Zwischenschaltung des Nutzers 10, der eine eindeutige Identifikation des USB-Tokens, auf dem die abgeleitete Identität abzuspeichern ist, über einen sicheren Übertragungsweg dem Identitäts-Server 40 übermittelt. Die eindeutige Identifikation kann dabei die Seriennummer des USB-Tokens 3 sein, die der Benutzer beispielsweise von dem Token abliest.

Unter Einbeziehung der eindeutigen Identifikation des USB-Tokens authentifizieren sich schließlich der Identitäts-Server 40 und die abgeleitete Identität 30 gegenseitig und bauen einen sicheren Datenkanal auf. Schließlich generiert die abgeleitete Identität 30 ein Schlüsselpaar aus einem öffentlichen und einem privaten Schlüssel, wobei das Schlüsselpaar gegebenenfalls auch durch den Identitäts-Server 40 erzeugt und über den sicheren Kanal vom Identitäts-Server zur abgeleiteten Identität übertragen werden kann. Zur Geheimhaltung des privaten Schlüssels wird dieser Schlüssel auf dem Datenträger 3 sicher und nicht auslesbar gespeichert. Die abgeleitete Identität 30 wird ferner durch ein Zertifikat spezifiziert, wobei dieses Zertifikat gemäß

Fig. 1 dadurch erzeugt wird, dass der öffentliche Schlüssel der abgeleiteten Identität 30 beim Identitäts-Server 40 mit dessen privatem Schlüssel signiert wird, wobei dieser signierte öffentliche Schlüssel als das Zertifikat der abgeleiteten Identität über den sicheren Datenkanal an die abgeleitete Identität zurückgegeben wird. Das Zertifikat wird dann in dem Datenträger 3 gesichert.

Zusätzlich zu dem auf dem Datenträger 3 generierten Schlüsselpaar können auch noch weitere Daten und Zugriffsrechte der Master-Identität 20 auf der abgeleiteten Identität 30 über den Identitäts-Server 40 übertragen werden. Insbesondere können hierbei spezielle Zugriffsrechte auf der abgeleiteten Identität festgelegt werden, welche sich von den Zugriffsrechten der Master-Identität unterscheiden können. Beispielsweise können Beschränkungen in der abgeleiteten Identität hinsichtlich des Verwendungszwecks der Identität hinterlegt werden. Um sicherzustellen, dass die abgeleitete Identität 30 auch nur von dem Nutzer der Hauptidentität verwendbar ist, wird in einem abschließenden Schritt schließlich noch ein Sicherheitscode, insbesondere in der Form einer PIN oder eines anderen Sicherheitsmerkmals, durch den Nutzer 10 auf der abgeleiteten Identität 30 hinterlegt. Nach der Aktivierung dieses Sicherheitsmerkmals durch den Nutzer ist die abgeleitete Identität 30 schließlich zur Identifikation des Nutzers 10 einsetzbar.

Prinzipiell kann die abgeleitete Identität 30 genauso eingesetzt werden wie die Master-Identität 20. Dadurch, dass der Identitäts-Server 40 die Generierung des Zertifikats für die abgeleitete Identität 30 übernommen hat, ist auch eine Differenzierung der Master-Identität 20 und der abgeleiteten Identität 30 durch einen Prüfer möglich, da sich die Zertifikate der Master-Identität und der abgeleiteten Identität unterscheiden. Somit kann ein Prüfer anhand der Zertifikate entscheiden, ob ein Service nur für die Master-Identität 20 und/ oder auch für eine bestimmte abgeleitete Identität verfügbar ist. Mit Hilfe des Zertifikats der abgeleiteten Identität 30 kann ferner auf einfache Weise die zeitliche Gültigkeit der abgeleiteten Identität 30 geeignet eingeschränkt werden, soweit dies erforderlich sein sollte.

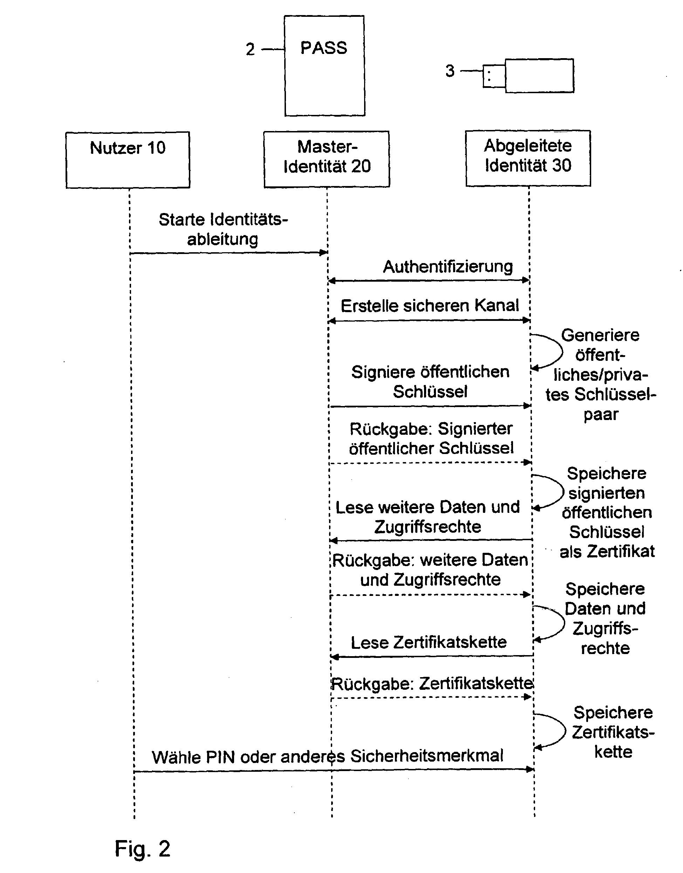

Fig. 2 zeigt den Ablauf einer Ausführungsform des erfindungsgemäßen Verfahrens. Im Unterschied zum Verfahren der Fig. 1 ist bei der Erzeugung der abgeleiteten Identität 30 aus der Master-Identität 20 kein Identitäts-Server zwischengeschaltet. Die Erzeugung der abgeleiteten Identität erfolgt über einen direkten Datenkanal zwischen der auf dem elektronischen Pass 2 gespeicherten Master-Identität 20 und dem Datenträger 3, auf dem die abgeleitete Identität 30 abzulegen ist.

In Analogie zu Fig. 1 wird die Identitätsableitung zunächst durch den Nutzer 10 gestartet. Es erfolgt dabei eine direkte Authentifizierung zwischen der Master-Identität 20 und der abgeleiteten Identität 30, wobei bei dieser Authentifizierung wiederum eine eindeutige Identifikation des Datenträgers 3 (z.B. dessen Seriennummer) eingesetzt werden kann, wie dies bereits bei der Authentifizierung zwischen Identitäts-Server 40 und Datenträger 3 in dem Verfahren der Fig. 1 erläutert wurde. Nach der Authentifizierung wird schließlich ein sicherer Kanal zwischen der Master-Identität 20 und dem Datenträger 3 aufgebaut. Anschließend wird durch den Datenträger 3 ein Schlüsselpaar aus einem öffentlichen und einem privaten Schlüssel erzeugt, wobei der private Schlüssel wiederum sicher und nicht auslesbar in dem Datenträger 3 gespeichert wird.

Im Unterschied zum Verfahren der Fig. 1 erfolgt die Erzeugung eines Zertifikats für die abgeleitete Identität nunmehr nicht unter Zwischenschaltung eines Identitäts-Servers, sondern die Master-Identität erzeugt das Zertifikat durch das Signieren des generierten öffentlichen Schlüssels der abgeleiteten Identität mit dem privaten Schlüssel der Master-Identität. Dieser signierte öffentliche Schlüssel wird an den Datenträger 3 zurückgegeben und dort als das Zertifikat der abgeleiteten Identität gespeichert. Anschließend werden weitere Daten der Master-Identität und entsprechende, für die abgeleitete Identität gültige Zugriffsrechte von dem Pass 2 gelesen und an die abgeleitete Identität zurückgegeben und dort auf dem Datenträger 3 gespeichert.

Gegebenenfalls kann in der Master-Identität eine Zertifikatskette hinterlegt sein, welche eine Folge von Zertifikaten darstellt, wobei jedes Zertifikat durch ein anderes Zertifikat der Folge signiert ist. Die Zertifikatskette endet schließlich in einem Stamm- oder Root-Zertifikat. Sofern eine solche Zertifikatskette in der Master-Identität 20 hinterlegt ist, wird diese Kette an die abgeleitete Identität 30 zurückgegeben und dort gespeichert. Es entsteht somit auf der abgeleiteten Identität eine erweiterte Zertifikatskette, welche neben der Zertifikatskette der Master-Identität schließlich noch das durch die Master-Identität generierte Zertifikat der abgeleiteten Identität enthält.

Analog zum Verfahren der Fig. 1 wird schließlich noch vor der Aktivierung der abgeleiteten Identität durch den Nutzer 10 ein Sicherheitsmerkmal zur Authentifizierung des Nutzers mit der abgeleiteten Identität auf dem Datenträger 3 hinterlegt. Das Sicherheitsmerkmal kann hierbei wiederum eine PIN oder ein anderes Sicherheitsmerkmal sein. Nach Aktivierung des Sicherheitsmerkmals ist die abgeleitete Identität 30 dann einsetzbar.

Die gemäß Fig. 2 erzeugte abgeleitete Identität 30 kann im Wesentlichen genauso wie die Master-Identität 20 eingesetzt werden. Nichtsdestotrotz können die beiden Identitäten voneinander unterschieden werden, denn beim Prüfen der Zertifikatskette der abgeleiteten Identität 30 muss zusätzlich das von der Master-Identität 20 generierte Zertifikat geprüft werden. Auf diese Weise ist somit eine Differenzierung der Master-Identität 20 von der abgeleiteten Identität 30 durch einen Prüfer möglich. Anhand der Zertifikate kann der Prüfer entscheiden, ob ein Dienst nur für die Master-Identität 20 oder auch für eine bestimmte abgeleitete Identität verfügbar sein soll. In Analogie zur Ausführungsform der Fig. 1 kann auch mit dem im Verfahren der Fig. 2 erzeugten Zertifikat der abgeleiteten Identität 30 die zeitliche Gültigkeit der abgeleiteten Identität geeignet beschränkt werden.

Gemäß den oben beschriebenen Ausführungsformen der Erfindung kann auf einfache Weise aus einer Master-Identität eine oder mehrere abgeleitete Identitäten generiert werden. Die abgeleiteten Identitäten können dann statt der Master-Identität zur Authentifizierung genutzt werden. Bei der Erzeugung der abgeleiteten Identität handelt es sich nicht um einen reinen Kopiervorgang, sondern um eine tatsächliche Ableitung. Insbesondere wird auch sichergestellt, dass die Master-Identität und die abgeleitete Identität voneinander unterscheidbar bleiben.

## Patentansprüche

1. Verfahren zum Erzeugen einer abgeleiteten elektronischen Identität (30) aus einer elektronischen Hauptidentität (20), **dadurch gekennzeichnet, dass**
a) zwischen einem ersten Datenträger (2), auf dem die Hauptidentität (20) umfassend ein erstes Schlüsselpaar aus einem ersten öffentlichen Schlüssel und einem ersten privaten Schlüssel gespeichert ist, und einem zweiten Datenträger (3) zur Speicherung der abgeleiteten Identität (30) eine authentifizierte Datenverbindung aufgebaut wird, wobei die Hauptidentität (20) die auf einem elektronischen Identifikationsdokument, insbesondere auf einem elektronischen Pass, gespeicherte Identität eines Nutzers (10) ist;
b) durch den zweiten Datenträger (30) ein einen zweiten öffentlichen Schlüssel und einen zweiten privaten Schlüssel umfassendes zweites Schlüsselpaar erzeugt wird;
c) ein Zertifikat der abgeleiteten Identität (20) erzeugt wird, indem der zweite öffentliche Schlüssel an den ersten Datenträger (2) gesendet und dort mit dem ersten privaten Schlüssel der Hauptidentität (20) signiert wird,
d) das zweite Schlüsselpaar sowie das Zertifikat der abgeleiteten Identität (20) auf dem zweiten Datenträger (3) gespeichert werden
e) und ein für die abgeleitete Identität (30) festgelegtes Sicherheitsmerkmal auf dem zweiten Datenträger (3) zur Authentifizierung eines Nutzers (10) mit der abgeleiteten Identität (20) gespeichert wird.

2. Verfahren nach Anspruch 1, **dadurch gekennzeichnet, dass** die authentifizierte Datenverbindung in Schritt a) unter Zwischenschaltung eines Identitäts-Servers (40) aufgebaut wird.

3. Verfahren nach Anspruch 2, **dadurch gekennzeichnet, dass** ein erster sicherer Datenkanal basierend auf einem Authentifizierungsprozess zwischen dem ersten Datenträger (2) und dem Identitäts-Server (40) und ein zweiter sicherer Datenkanal basierend auf einem Authentifizierungsprozess zwischen dem Identitäts-Server (40) und dem zweiten Datenträger (3) aufgebaut wird.

4. Verfahren nach Anspruch 3, **dadurch gekennzeichnet, dass** in dem Identitäts-Server (40) eine eindeutige Identifikation des zweiten Datenträgers (3) hinterlegt wird und sich der zweite Datenträger (3) über seine eindeutige Identifikation beim Identitäts-Server (40) authentifiziert.

5. Verfahren nach Anspruch 1, **dadurch gekennzeichnet, dass** die authentifizierte Datenverbindung in Schritt a) durch einem direkten Authentifizierungsprozess zwischen dem ersten Datenträger (2) und dem zweiten Datenträger (3) aufgebaut wird.

6. Verfahren nach Anspruch 5, **dadurch gekennzeichnet, dass** auf dem ersten Datenträger (2) ein Zertifikat der Hauptidentität (20) oder eine Zertifikatskette hinterlegt ist, wobei das Zertifikat oder die Zertifikatskette auf dem zweiten Datenträger gespeichert wird.

7. Verfahren nach einem der vorhergehenden Ansprüche, **dadurch gekennzeichnet, dass** in Schritt b) ferner für die abgeleitete Identität (30) gültige Zugriffrechte und/ oder Beschränkungen und/ oder weitere Daten der Hauptidentität (20) auf dem zweiten Datenträger (3) ge-10 speichert werden.

8. Verfahren nach einem der vorhergehenden Ansprüche, **dadurch gekennzeichnet, dass** der zweite private Schlüssel nicht auslesbar auf dem zweiten Datenträger (3) gespeichert wird.

9. Verfahren nach einem der vorhergehenden Ansprüche, **dadurch gekennzeichnet, dass** der erste und zweite Datenträger elektronische Identitäts-Token sind der erste Datenträger (2) und/ oder der zweite Datenträger (3) insbesondere eine Chipkarte oder ein USB-Token sind.

10. System zum Erzeugen einer abgeleiteten elektronischen Identität (30) aus einer elektronischen Hauptidentität (20), umfassend:
einen ersten Datenträger (2), auf dem die Hauptidentität (20) umfassend ein erstes Schlüsselpaar aus einem ersten öffentlichen Schlüssel und einem ersten privaten Schlüssel gespeichert ist, und einen zweiten Datenträger (3) zur Speicherung der abgeleiteten Identität (30), **dadurch gekennzeichnet, dass**
der erste und zweite Datenträger (2, 3) im Betrieb derart zusammenwirken können, dass ein Verfahren nach einem der vorhergehenden Ansprüche durchführbar ist.

11. System nach Anspruch 10, **dadurch gekennzeichnet, dass** das System einen Identitäts-Server (40) zur Durchführung eines Verfahrens nach einem der Ansprüche 1 bis 5 umfasst.

## Claims

1. A method for generating a derived electronic identity (30) from an electronic main identity (20), **characterized in that**
a) an authenticated data connection is set up between a first data carrier (2) on which the main identity (20) is stored, comprising a first pair of keys of a first public key and a first private key, and a second data carrier (3) for storing the derived identity (30), wherein the main identity (20) is the identity of a user (10) stored on an electronic identification document, in particular on an electronic passport;
b) by the second data carrier (30) a second pair of keys is generated comprising a second public key and a second private key;
c) a certificate of the derived identity (20) is generated by sending the second public key to the first data carrier (2) and signing it there with the first private key of the main identity (20),
d) the second pair of keys as well as the certificate of the derived identity (20) are stored on the second data carrier (3),
e) and a security feature determined for the derived identity (30) is stored on the second data carrier (3) for authenticating a user (10) with the derived identity (20).

2. The method according to claim 1, **characterized in that** the authenticated data connection is set up in step a) through the intermediary of an identity server (40).

3. The method according to claim 2, **characterized in that** a first secure data channel is set up on the basis of an authentication process between the first data carrier (2) and the identity server (40) and a second secure data channel is set up on the basis of an authentication process between the identity server (40) and the second data carrier (3).

4. The method according to claim 3, **characterized in that** in the identity server (40) a unique identification of the second data carrier (3) is stored and the second data carrier (3) authenticates itself to the identity server (40) through its unique identification.

5. The method according to claim 1, **characterized in that** the authenticated data connection in step a) is set up through a direct authentication process between the first data carrier (2) and the second data carrier (3).

6. The method according to claim 5, **characterized in that** on the first data carrier (2) a certificate of the main identity (20) or a certificate chain is stored, wherein the certificate or the certificate chain is stored on the second data carrier.

7. The method according to any of the preceding claims, **characterized in that** in step b) further valid access rights and/or limitations for the derived identity (30) and/or further data of the main identity (20) are stored on the second data carrier (3).

8. The method according to any of the preceding claims, **characterized in that** the second private key is so stored on the second data carrier (3) that it cannot be read out.

9. The method according to any of the preceding claims, **characterized in that** the first and second data carrier are electronic identity tokens and the first data carrier (2) and/or the second data carrier (3) are in particular a chip card or a USB token.

10. A system for generating a derived electronic identity (30) from an electronic main identity (20), comprising: a first data carrier (2) on which the main identity (20) is stored, comprising a first pair of keys of a first public key and a first private key, and a second data carrier (3) for storing the derived identity (30), **characterized in that** the first and second data carrier (2, 3) can so interact during operation that a method according to any of the preceding claims can be carried out.

11. The system according to claim 10, **characterized in that** the system comprises an identity server (40) for carrying out a method according to any of the claims 1 to 5.

## Revendications

1. Procédé de génération d'une identité électronique dérivée (30) à partir d'une identité électronique principale (20), **caractérisé en ce que**
a) entre un premier support de données (2) sur lequel l'identité principale (20) comprenant une première paire de clés d'une première clé publique et d'une première clé privée est mémorisée, et un deuxième support de données (3) destiné à la mémorisation de l'identité dérivée (30), une connexion de données authentifiée est établie, l'identité principale (20) étant l'identité d'un usager (10) mémorisée sur un document d'identification électronique, notamment sur un passeport électronique ;
b) par le deuxième support de données (30), une deuxième paire de clés comprenant une deuxième clé publique et une deuxième clé privée est générée ;
c) un certificat de l'identité dérivée (20) est généré, ce qui a lieu **en ce que** la deuxième clé publique est envoyée au premier support de données (2) et y est signée avec la première clé privée de l'identité principale (20),
d) la deuxième paire de clés ainsi que le certificat de l'identité dérivée (20) sont mémorisés sur le deuxième support de données (3),
e) et une caractéristique de sécurité fixée pour l'identité dérivée (30) est mémorisée sur le deuxième support de données (3) pour l'authentification d'un usager (10) avec l'identité dérivée (20).

2. Procédé selon la revendication 1, **caractérisé en ce que** la connexion de données authentifiée est établie à l'étape a) avec branchement intermédiaire d'un serveur d'identité (40).

3. Procédé selon la revendication 2, **caractérisé en ce qu'**un premier canal de données sécurisé basé sur un processus d'authentification entre le premier support de données (2) et le serveur d'identité (40) et un deuxième canal de données sécurisé basé sur un processus d'authentification entre le serveur d'identité (40) et le deuxième support de données (3) est établi.

4. Procédé selon la revendication 3, **caractérisé en ce que**, dans le serveur d'identité (40), une identification univoque du deuxième support de données (3) est consignée et **en ce que** le deuxième support de données (3) s'authentifie auprès du serveur d'identité (40) par le biais de son identification univoque.

5. Procédé selon la revendication 1, **caractérisé en ce que** la connexion de données authentifiée est établie à l'étape a) par un processus d'authentification direct entre le premier support de données (2) et le deuxième support de données (3).

6. Procédé selon la revendication 5, **caractérisé en ce que**, sur le premier support de données (2), un certificat de l'identité principale (20) ou une chaîne de certificat est consigné(e), le certificat ou la chaîne de certificat étant mémorisé(e) sur le deuxième support de données.

7. Procédé selon une des revendications précédentes, **caractérisé en ce que**, à l'étape b), il est en outre mémorisé sur le deuxième support de données (3) des droits d'accès valides pour l'identité dérivée (30) et/ou des restrictions et/ou des autres données de l'identité principale (20).

8. Procédé selon une des revendications précédentes, **caractérisé en ce que** la deuxième clé privée n'est pas mémorisée de façon lisible sur le deuxième support de données (3).

9. Procédé selon une des revendications précédentes, **caractérisé en ce que** le premier et deuxième support de données sont des jetons d'identité électroniques, le premier support de données (2) et/ou le deuxième support de données (3) étant notamment une carte à puce ou un jeton USB.

10. Système de génération d'une identité électronique dérivée (30) à partir d'une identité électronique principale (20), comprenant:
un premier support de données (2) sur lequel l'identité principale (20) comprenant une première paire de clés d'une première clé publique et
d'une première clé privée est mémorisée, et un deuxième support de données (3) destiné à la mémorisation de l'identité dérivée (30),
**caractérisé en ce que**
le premier et deuxième support de données (2, 3) peuvent co-agir de telle sorte lors du fonctionnement qu'un procédé selon une des revendications précédentes est exécutable.

11. Système selon la revendication 10, **caractérisé en ce que** le système comprend un serveur d'identité (40) destiné à l'exécution d'un procédé selon une des revendications de 1 à 5.
